# DEMANDE DE BREVET EUROPEEN

(11) **EP 3 173 654 A1**
(43) Date de publication de la demande: **31.05.2017**
(21) Numéro de dépôt: 16198178.2
(22) Date de dépôt: 10.11.2016
(51) Int. Cl.: F16D 69/02, C08J 5/04

(54) **GARNITURE DE FRICTION COMPRENANT UNE RESINE MELAMINE ETHERIFIEE**

(30) Priorité: 25.11.2015 FR 1561378
(71) Demandeur: Valeo Matériaux de Friction, 87020 Limoges (FR)
(72) Inventeur: BOYER, Gérard, 87480 Saint Priest Taurion (FR); BONNET, Emmanuel, 87920 Condat sur Vienne (FR); DENIS, Pascal, 87570 Rilhac-Lancon (FR); PAGENOT, Martine, 87590 Saint Just le Martel (FR)
(74) Mandataire: Cardon, Nicolas

(57) **Abrégé**

Garniture de friction (10), notamment pour disque de friction, en particulier pour véhicule automobile comprenant deux faces opposées définissant entre elles une épaisseur comprenant au moins une nappe de fils imprégnés d'une matrice, caractérisé en ce que la matrice imprégnant les fils comprend une résine mélamine éthérifiée (MER).

## Description

L'invention se rapporte à une garniture de friction, notamment pour disque de friction, en particulier pour véhicule automobile ainsi qu'à un procédé de fabrication d'une garniture de friction. En outre, l'invention concerne également un disque de friction comprenant une garniture de friction selon l'invention et un embrayage comprenant un tel disque de friction.

De façon connue, les garnitures de friction montées sur un disque de friction d'un embrayage sont en général constituées d'un matériau possédant à la fois des propriétés de résistance à la friction et de tenue mécanique pour la tenue en centrifugation des garnitures et pour leur fixation sur un support métallique.

Lorsque l'embrayage est en position embrayée, les garnitures de friction sont serrées entre des plateaux de pression et de réaction sous l'action de moyens dits « embrayeurs ».

Les garnitures de friction sont donc amenées à frotter contre les plateaux de pression et de réaction qui sont généralement en fonte.

Les garnitures de friction sont fixées, généralement par rivetage ou par collage, sur un disque de support.

Afin d'obtenir les meilleures performances pour une garniture de friction, tant sur le plan de la résistance à la friction que sur celui de la résistance en centrifugation et sur celui de la tenue mécanique de la fixation, il est préférable de choisir des matériaux de constitution différente: l'un est sélectionné pour son aptitude à résister à la friction et l'autre pour sa tenue mécanique.

Par ailleurs, les constituants du matériau de la couche de fixation peuvent être plus économiques que les constituants de la couche de friction.

Plus particulièrement, une garniture de friction est composée d'un ou de plusieurs fils imprégnés, un fil imprégné étant un fil appelé fil blanc qui est imprégné d'une matrice.

La matrice d'imprégnation, quant à elle, est constituée d'une ou de plusieurs résines thermodurcissables, de caoutchoucs et de charge.

Typiquement, la matrice d'imprégnation comprend une combinaison de résines thermodurcissables formo-phénoliques, et mélamine formaldéhyde (MF) et/ou mélamine urée formaldéhyde (MUF), le tout dispersé dans un solvant aqueux ou non.

Le procédé le plus utilisé pour la fabrication de garnitures de friction d'embrayages est le procédé d'imprégnation d'une base filaire continue, ou encore nappe de fils, en phase solvant (organique ou aqueux) suivi d'une phase de mise en préforme puis d'une phase de cuisson par « compression à chaud » afin de procéder à polymérisation des systèmes réticulants.

D'autres procédés d'imprégnation de base filaire continue, comme des procédés de co-extrusion ou de pultrusion, pourraient également être utilisés. Ces procédés nécessitent une phase de ramollissement thermoplastique ou l'utilisation d'un solvant (aqueux ou organique) pour l'étape d'imprégnation de la base filaire continue par la matière organique réticulable avant la phase de cuisson ou de réticulation.

Sans l'emploi de solvant, tel qu'un solvant aqueux ou un solvant organique, l'utilisation dans les autres procédés mentionnés ci-dessus de résine thermodurcissable mélamine formaldéhyde (MF) et/ou mélamine urée formaldéhyde (MUF) est impossible

En effet, ces résines mélamine formaldéhyde (MF) et/ou mélamine urée formaldéhyde (MUF) sont thermo-réticulantes, c'est-à-dire qu'elles réticulent sans passer par une phase transitoire plastique et deviennent infusibles.

Ainsi, il existe un besoin pour bénéficier d'une résine thermodurcissable permettant l'utilisation de procédé tels que la co-extrusion ou la pultrusion pour la fabrication de garnitures de friction sans avoir recours pour ce faire à un solvant, notamment sans solvant aqueux ou sans solvant organique.

L'un des buts de la présente invention est de fournir une garniture de friction pouvant être obtenue en utilisant un procédé de co-extrusion ou de pultrusion sans avoir recours à un solvant pour imprégner la nappe de fils par une matrice.

L'invention propose ainsi une garniture de friction, notamment pour disque de friction, en particulier pour véhicule automobile comprenant deux faces opposées définissant entre elles une épaisseur comprenant au moins une nappe de fils imprégnés d'une matrice, caractérisé en ce que la matrice imprégnant les fils comprend une résine mélamine éthérifiée (MER).

Avantageusement, les inventeurs ont pu observer que les résines mélamine éthérifiée (MER), présentent des propriétés thermoplastiques à une température inférieure à leur température de réticulation permettant de les utiliser dans des procédés de co-extrusion ou pultrusion sans avoir recours à un solvant tel qu'un solvant aqueux ou organique lors de l'étape d'imprégnation de la nappes de fils par la matrice.

L'absence de recours à un solvant permet d'une part de diminuer l'énergie nécessaire à la mise en oeuvre de l'étape d'imprégnation, de supprimer les effluents gazeux et liquides associés à cette étape d'imprégnation, et de réduire le coût de fabrication des garnitures.

De plus, les garnitures de friction selon l'invention présentent des caractéristiques qui satisfont aux critères généraux connus de l'homme de l'art, en termes de propriétés ou performances tribologiques et mécaniques : coefficient de friction, tenue en fadding, niveau d'usure, niveau de confort ou amortissement des vibrations, niveau de centrifugation à chaud.

La garniture de friction selon l'invention peut également comprendre une ou plusieurs des caractéristiques ci-dessous, considérées individuellement ou selon toutes les combinaisons techniquement possibles :
- le pourcentage massique en résine mélamine éthérifiée dans la matrice d'imprégnation est supérieur ou égal à 5 ; et/ou
- le pourcentage massique en résine mélamine éthérifiée dans la matrice d'imprégnation est inférieur ou égal à 50 ; et/ou
- la résine mélamine éthérifiée est produite à partir :
   - d'hexamethoxymethylolmelamine (HMMM) ou de hexabutoxymethylolmelamine (HBMM), et
   - ethers mixtes d'alcools C1 - C5 ;
et/ou
- la au moins une nappe de fils est une nappe de fils lobés et/ou
- la garniture de friction comprend en outre une pluralité de nappes de fils lobés imprégnés de deux types, à savoir des fils imprégnés dits « de friction » et des fils imprégnés dits « de fixation », conférant à la garniture de friction à la fois une résistance à la friction et une tenue mécanique, les fils de l'un au moins des deux types, notamment les fils des deux types, étant imprégnés de matrices comprenant une résine mélamine éthérifiée ; et/ou
- la matrice d'imprégnation comprend en plus de la résine mélamine éthérifiée, une résine phénolique, du caoutchouc et des charges ; et/ou
- le ratio massique de matrice I = 100 (Mfi - Mfs)/Mfs est supérieur ou égal à 60 et inférieur ou égal à 180, avec Mfi la masse du fil imprégné et Mfs la masse du fil seul.

La garniture de friction peut être de type mono-couche, la couche étant formée par un empilement de nappes de fils lobés imprégnés de la matrice comprenant une résine mélamine étherifiée.

En variante, la garniture de friction peut être de type bi-couche, comprenant une couche dite « de friction » formée par un empilement de nappes de fils lobés imprégnés dits « de friction », et une couche dite « de fixation » formée par un empilement de nappes de fils lobés imprégnés dits « de fixation ».

Les fils lobés dits « de fixation » peuvent être imprégnés de la matrice comprenant la résine mélamine éthérifiée et/ou les fils lobés dits « de friction » peuvent être imprégnés de la matrice comprenant la résine mélamine éthérifiée.

L'invention se rapporte également à un procédé de fabrication d'une garniture de friction comprenant deux faces opposées définissant entre elles une épaisseur comprenant au moins une nappe de fils imprégnés, le procédé étant caractérisé en ce qu'il comprend une étape d'imprégnation au cours de laquelle on imprègne la nappe de fils avec une matrice comprenant une résine mélamine éthérifiée.

L'étape d'impégrantion peut se faire par co-extrusion ou pultrusion, et cette étape d'imprégnation de la nappe de fils par la matrice peut être réalisée en phase platique sans solvant, notamment sans solvant aqueux ou sans solvant organique, cette étape d'imprégnation étant notamment réalisée à une température supérieure ou égale à 80°C et inférieure ou égale à 130°C.

Le procédé de fabrication d'une garniture de friction selon l'invention peut également comprendre une ou plusieurs des caractéristiques ci-dessous, considérées individuellement ou selon toutes les combinaisons techniquement possibles :
- la matrice utilisée au cours de l'étape d'imprégnation comprend un pourcentage massique en résine mélamine éthérifiée supérieur ou égal à 5 ; et/ou
- la matrice utilisée au cours de l'étape d'imprégnation comprend un pourcentage massique en résine mélamine éthérifiée inférieur ou égal à 50 ; et/ou
- la matrice utilisée au cours de l'étape d'imprégnation contient une résine mélamine éthérifiée produite à partir :
   - d' hexamethoxymethylolmelamine (HMMM) ou d'hexabutoxymethylolmelamine (HBMM), et
   - d'ethers mixtes d'alcools C1 - C5 ;
et/ou
- le procédé comprend en outre suite à l'étape d'imprégnation, une étape de mise en préforme, puis de réticulation au cours de laquelle la matrice imprégnant la au moins une nappe de fils est réticulée par chauffage à une température supérieure ou égale à 140°C, et une étape de stabilisation thermique ; et/ou
- au cours de l'étape d'imprégnation la quantité de matrice d'imprégnation est déterminée de sorte que le ratio massique de matrice I = 100 (Mfi - Mfs)/Mfs soit supérieur ou égal à 60 et inférieur ou égal à 180, avec Mfi la masse du fil imprégné et Mfs la masse du fil seul.

En particulier, les résines mélamine modifiées phénol formaldéhyde ne sont pas des mélamines éthérifiées (MER).

En particulier, la garniture de friction est une garniture qui dépourvue d'amiante, la garniture pouvant être uniquement à base de fibres minérales et de fibres organiques.

En particulier, la résine mélamine peut être éthérifiée avec des alcools C1-C5 bien que la résine mélamine peut être éthérifiée avec tout type d'alcool.

L'invention se rapporte en outre à un disque de friction comprenant au moins un disque support et une garniture de friction selon l'invention.

L'invention concerne également un embrayage, notamment de véhicule automobile, comprenant un disque de friction selon l'invention.

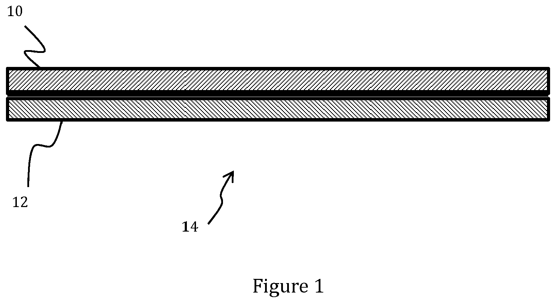

L'invention sera mieux comprise à la lumière de la description suivante qui n'est donnée qu'à titre indicatif et qui n'a pas pour but de limiter ladite invention, faite en référence à la figure 1 illustrant un disque de friction selon l'invention.

Comme représenté sur la figure 1, l'invention concerne une garniture de friction 10 pouvant être fixée, par exemple par collage, sur un disque support 12 formant ainsi un disque de friction 14.

La fixation de la garniture de friction 10 sur le disque support 12 peut être obtenue par différents procédés connus.

Il est connu, par exemple de EP0781937, des procédés de collage d'un matériau de friction sur un support en acier afin d'obtenir des disques de friction. Le procédé de collage décrit dans EP0781937 comprend le collage d'un matériau de friction sur un support en acier préalablement enduit de colle contenant un solvant. Le procédé de collage comprend l'application d'une pression à température donnée de sorte que le chauffage soit plus rapide côté support métallique enduit de colle, afin que la colle commence à durcir au contact du matériau de friction avant que celui-ci ne se dilate.

La garniture de friction 10 et le disque de friction 14 sont notamment destinés aux véhicules automobiles, en particulier pour des embrayages à sec ou humides ou encore pour des disques et plaquettes de frein.

On entend par véhicule automobile au sens de l'invention un véhicule terrestre disposant de roues et équipé d'un moteur embarqué qui le propulse, en particulier les voitures, camionnettes, camions, autobus, cars, utilitaires, deux roues etc...

La garniture de friction 10 selon l'invention comprend deux faces opposées définissant entre elles une épaisseur. La garniture de friction selon l'invention comprend en son épaisseur au moins une nappe de fils imprégnés d'une matrice.

La garniture de friction selon l'invention est remarquable en ce que la matrice imprégnant les fils comprend une résine mélamine éthérifiée (MER).

Des exemples de résines mélamine éthérifiée (MER) sont décrits par exemple dans le demande de brevet US2009/0054616A1 et dans la demande EP 1 607 391A1, décrivant des résines thermodurcissables à motif mélaminé 2, 4, 6 triamino-s-triazine modifié, ayant un comportement thermoplastique avant la phase de réticulation proprement dite.

Le document « Ratsch & A1 - The Reaction Mechanism of the Transetherification and Crosslinking of Melamine Resins, acromol.Symp.204,217, 431-443 » décrit la modification du motif mélaminé 2,4,6 triamino-s-triazine par « méthylolation » totale ou partielle, suivie d'une « éthérification » totale ou partielle par un composé alcoolé.

La structure chimique d'une telle résine mélamine éthérifiée (MER) peut être décrite de la manière suivante : 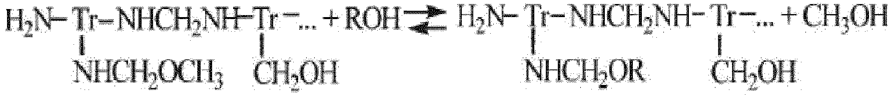 Avec Tr: 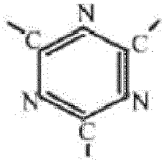 et R un composant aliphatique ou aromatique.

Ces résines présentent de propriétés thermoplastiques à basse température, typiquement à une température inférieure à leur température de réticulation, par exemple entre 80°C et 130°C avec une température de réticulation autour de 150°C.

Avantageusement, les inventeurs ont constaté que l'ajout de ces résines dans la matrice d'imprégnation permet de conférer à la matrice d'imprégnation des propriétés thermoplastiques, à savoir une phase de ramollissement, à des températures inférieures à la température de réticulation. Ces propriétés thermoplastique de la matrice d'imprégnation permettent d'utiliser des procédés d'imprégnation de type co-extrusion ou pultrusion.

Selon un mode de réalisation préféré de l'invention, la résine mélamine éthérifiée (MER) utilisée est produite à partir :
- d'hexamethoxymethylolmelamine (HMMM) ou d'hexabutoxymethylolmelamine, et
- d'ethers mixtes d'alcools C1 - C5.

En effet, l'utilisation de ces résines permettent d'obtenir un bon compromis entre les propriétés thermoplastiques de la matrice d'imprégnation et les propriétés tribologiques et mécaniques de la garniture de friction.

Typiquement, la matrice utilisée pour l'imprégnation des fils dans une garniture de friction selon l'invention, contient en plus de la résine mélamine éthérifiée (MER), des résines phénoliques, du caoutchouc ou élastomère, des charges de remplissages minérales et/ou organiques et des charges tribologiques, comme des abrasifs et/ou des lubrifiants.

La matrice d'imprégnation comprend par exemple au moins 5%, par exemple au moins 10%, en pourcentage massique de résine mélamine éthérifiée (MER). Avantageusement, cela permet de garantir des propriétés thermoplastiques de la matrice d'imprégnation compatibles avec les procédés de co-extrusion ou pultrusion.

Les inventeurs ont constaté qu'il était possible de fabriquer des garnitures de friction satisfaisant les critères généraux en terme de propriétés tribologiques et mécanique en ayant un pourcentage massique en résine mélamine éthérifiée (MER) allant jusqu'à 50%, par exemple 45%.

Typiquement, les fils imprégnés sont constitués de fils blancs contenant par exemple, du cuivre, du verre et de l'acrylique. La nappe de fils peut être une nappe de fils lobés.

Comme décrit en détail dans la demande FR2858672, la garniture de friction selon l'invention peut comprenant une pluralité de nappes de fils lobés imprégnés de deux types, à savoir des fils imprégnés dits de friction et des fils imprégnés dits de fixation, conférant à la garniture de friction à la fois une résistance à la friction et une tenue mécanique. Dans la garniture de friction selon l'invention, les fils des deux types sont imprégnés de matrices comprenant une résine mélamine éthérifiée.

L'invention concerne également un procédé de fabrication d'une garniture de friction comprenant deux faces opposées définissant entre elles une épaisseur comprenant au moins une nappe de fils imprégnés. Le procédé selon l'invention est remarquable en ce qu'il comprend une étape d'imprégnation au cours de laquelle on imprègne la au moins une nappe de fils avec une matrice comprenant une résine mélamine éthérifiée.

Avantageusement, les propriétés thermoplastiques de la résine mélamine éthérifiée permettent que l'étape d'imprégnation puisse être mise en oeuvre par co-extrusion ou pultrusion en phase plastique, notamment à une température supérieure ou égale à 80°C et inférieure ou égale à 130°C, et cette étape d'imprégnation est effectuée sans solvant, notamment sans solvant aqueux et sans solvant organique.

La nature des fils et la composition de la matrice d'imprégnation sont comme décrits précédemment.

En particulier, la matrice utilisée au cours de l'étape d'imprégnation comprend de préférence un pourcentage massique en résine mélamine éthérifiée supérieur ou égal à 5 et inférieur ou égal à 50.

De plus, la matrice d'imprégnation utilisée au cours de l'étape d'imprégnation contient de préférence une résine mélamine éthérifiée produite à partir :
- d'hexamethoxymethylolmelamine (HMMM) ou d'hexabutoxymethylolmelamine (HBMM), et
- d'ethers mixtes d'alcools C1 - C5.

Après l'étape de mise en préforme, le procédé de fabrication d'une garniture de friction selon l'invention comprend en outre de préférence :
- une étape de réticulation au cours de laquelle la matrice imprégnant la au moins une nappe de fils est réticulée par chauffage à une température supérieure ou égale à 140°C, et de préférence inférieure ou égale à 180°C par exemple inférieure ou égale à 160°C, et
- une étape de stabilisation thermique.

L'étape de réticulation est typiquement réalisée sous presse.

Les fils imprégnés ou revêtus, obtenus à partir du procédé selon l'invention peuvent être utilisés dans des garnitures de friction pour d'embrayage à sec en couche frottante en associant les résines mélamine éthérifiée à un système classique pour matériaux de friction, comprenant par exemple des résines phénoliques, des charges avec modificateurs de friction type abrasifs ou lubrifiants, des charges de remplissage et des charges amortissantes type élastomère.

Les fils imprégnés ou revêtus, obtenus à partir du procédé selon l'invention peuvent être utilisés dans des garnitures de friction pour d'embrayage à sec en couche renforçante ou sous-couche.

Les inventeurs ont réalisés deux garnitures de friction selon l'invention à partir de matrices d'imprégnation ayant les compositions massiques suivantes :

| | Exemple 1 | Exemple 2 |
|---|---|---|
| Résine Phénolique | 20% | 40% |
| Résine mélamine éthérifiée | 40% | 20% |
| Caoutchouc ou Elastomère | 20% | 20% |
| Charges de remplissages minérales et/ou organiques | 5% | 15% |
| Charges tribologiques | 15% | 5% |

Pour la fabrication de ces garnitures de friction, la matrice d'imprégnation est déposée sur une base filaire continue selon un procédé de co-extrusion ou de pultrusion en l'absence de solvant.

Le ratio de quantité massique de matrice d'imprégnation, par rapport à la quantité massique de fils continus I%, est compris entre 60 et 180%, et est défini de la manière suivante :
I = 100 x (poids du fil imprégné ou revêtu - poids du fil seul) / poids du fils seul.

Les garnitures de friction ont été obtenues selon un procédé bien connu de l'homme du métier, à savoir :
- préformage du fil continu imprégné et contenant la résine d'imprégnation, et
- cuisson / ébavurage de la préforme.

Le procédé peut également comprendre une étape de sur-cuisson et/ou traitement thermique.

De même il est possible de prévoir un façonnage final, en particulier afin de permettre de rectification à la cote ou épaisseur initiale et perçage.

Les inventeurs ont observé que les caractéristiques des garnitures de friction ainsi obtenues satisfont aux critères généraux connus de l'homme de l'art, en termes de propriété ou performance tribologique et mécanique : coefficient de friction, tenue en fadding, niveau d'usure, niveau de confort ou amortissement des vibrations, niveau de centrifugation à chaud.

L'invention a été décrite ci-dessus avec l'aide de modes de réalisation présentés sur la figure, sans limitation du concept inventif général.

Bien d'autres modifications et variations se suggèrent d'elles même à l'homme du métier, après réflexion sur les différents modes de réalisation illustrés dans cette demande. Ces modes de réalisation sont donnés à titre d'exemple et ne sont pas destinés à limiter la portée de l'invention, qui est déterminée exclusivement par les revendications ci-dessous.

Le simple fait que différentes caractéristiques sont énumérées en revendications mutuellement dépendantes n'indique pas qu'une combinaison de ces caractéristiques ne puisse être avantageusement utilisée. Enfin, toute référence numérique utilisée dans les revendications ne doit pas être interprétée comme une limitation de la portée de l'invention.

## Revendications

1. Garniture de friction, notamment pour disque de friction, en particulier pour véhicule automobile comprenant deux faces opposées définissant entre elles une épaisseur comprenant au moins une nappe de fils imprégnés d'une matrice, **caractérisé en ce que** la matrice imprégnant les fils comprend une résine mélamine éthérifiée (MER).

2. Garniture de friction selon la revendication 1, dans laquelle le pourcentage massique en résine mélamine éthérifiée dans la matrice d'imprégnation est supérieur ou égal à 5.

3. Garniture de friction selon l'une des revendications 1 ou 2, dans laquelle le pourcentage massique en résine mélamine éthérifiée dans la matrice d'imprégnation est inférieur ou égal à 50.

4. Garniture de friction selon l'une des revendications précédentes, dans laquelle la résine mélamine éthérifiée est produite à partir :
- d'hexamethoxymethylolmelamine (HMMM) ou d'hexabutoxymethylolmelamine (HBMM), et
- d'ethers mixtes d'alcools C1 - C5.

5. Garniture de friction selon l'une des revendications précédentes, dans laquelle la au moins une nappe de fils est une nappe de fils lobés.

6. Garniture de friction selon l'une des revendications précédentes, dans laquelle le ratio massique de matrice I = 100 (Mfi - Mfs)/Mfs est supérieur ou égal à 60 et inférieur ou égal à 180, avec Mfi la masse du fil imprégné et Mfs la masse du fil seul.

7. Procédé de fabrication d'une garniture de friction comprenant deux faces opposées définissant entre elles une épaisseur comprenant au moins une nappe de fils imprégnés, le procédé étant **caractérisé en ce qu'**il comprend une étape d'imprégnation au cours de laquelle on imprègne la au moins une nappe de fils avec une matrice comprenant une résine mélamine éthérifiée.

8. Procédé selon la revendication 7, dans lequel la matrice utilisée au cours de l'étape d'imprégnation comprend un pourcentage massique en résine mélamine éthérifiée supérieur ou égal à 5.

9. Procédé selon l'une des revendications 7 ou 8, dans lequel la matrice utilisée au cours de l'étape d'imprégnation comprend un pourcentage massique en résine mélamine éthérifiée inférieur ou égal à 50.

10. Procédé selon l'une des revendications 7 à 9, dans lequel la matrice utilisée au cours de l'étape d'imprégnation contient une résine mélamine éthérifiée produite à partir :
- d'hexamethoxymethylolmelamine (HMMM) ou d'hexabutoxymethylolmelamine (HBMM), et
- d'ethers mixtes d'alcools C1 - C5.

11. Procédé selon d'une des revendications 7 à 10, dans lequel l'étape d'imprégnation est réalisée sans solvant, notamment sans solvant aqueux ou sans solvant organique, par un procédé de coextrusion ou de pultrusion en phase plastique, notamment à une température supérieure ou égale à 80°C et inférieure ou égale à 130°C.

12. Procédé selon l'une des revendications 7 à 11, comprenant suite à l'étape d'imprégnation,
- une étape de mise en préforme
- une étape de réticulation au cours de laquelle la matrice imprégnant la au moins une nappe de fils est réticulée par chauffage à une température supérieure ou égale à 140°C, et
- une étape de stabilisation thermique.

13. Procédé selon l'une des revendications 7 à 12, dans lequel au cours de l'étape d'imprégnation la quantité de matrice d'imprégnation est déterminée de sorte que le ratio massique de matrice I = 100 (Mfi - Mfs)/Mfs soit supérieur ou égal à 60 et inférieur ou égal à 180, avec Mfi la masse du fil imprégné et Mfs la masse du fils seul.

14. Disque de friction (14) comprenant au moins un disque support (12) et une garniture de friction (10) selon l'une des revendications 1 à 6.

15. Embrayage, notamment de véhicule automobile, comprenant un disque de friction (14) selon la revendication 14.
